# EUROPEAN PATENT APPLICATION

(11) **EP 2 302 717 A1**
(43) Date of publication of application: **30.03.2011**
(21) Application number: 09179753.0
(22) Date of filing: 17.12.2009
(51) Int. Cl.: H01M 2/14, H01M 10/04, H01M 2/16, H01M 10/0525

(54) **Electrode assembly for a rechargeable battery**

(30) Priority: 02.09.2009 US 239319 P; 15.12.2009 US 638828
(71) Applicant: Samsung SDI Co., Ltd., Gyeonggi-do (KR)
(72) Inventor: Roh, Sae-Weon, Gyeonggi-do (KR); Kim, Sung-Soo, Gyeonggi-do (KR); Kim, Tae-Keun, Gyeonggi-do (KR); Hong, Jin-Kyu, Gyeonggi-do (KR); Kim, Jun-Sik, Gyeonggi-do (KR); Han, Man-Seok, Gyeonggi-do (KR); Choi, Nam-Soon, Gyeonggi-do (KR); Lee, Chong-Hoon, Gyeonggi-do (KR)
(74) Representative: Walaski, Jan Filip

(57) **Abstract**

An electrode assembly according to an exemplary embodiment of the present invention includes a positive electrode where a positive electrode active material is coated on a positive electrode current collecting body, a negative electrode where a negative electrode active material is coated on a negative electrode current collecting body, a first separator disposed between the positive and negative electrodes and having a first pore extended in a first direction, and a second separator disposed at a distance from the first separator, interposing the positive electrode or the negative electrode and having a second pore extended in a second direction that crosses the first direction. According to the present invention, an electrolyte solution replacement function of the electrode assembly is improved so that a stable output can be provided and life-span can be improved.

## Description

The present invention relates to an electrode assembly and a rechargeable battery, and more particularly it relates to an electrode assembly of which a structure of a separator is improved, and a rechargeable battery.

Unlike a primary battery that cannot be recharged, a rechargeable battery can be repeatedly charged and discharged. Low-capacity rechargeable batteries are used for portable compact electronic apparatuses such as mobile phones, notebook computers, and camcorders, and high-capacity rechargeable batteries are widely used as a power source for driving a motor of a hybrid vehicle, etc.

Recently, a high-output rechargeable battery using a non-aqueous electrolyte having high energy density has been developed. The high-output rechargeable battery is configured with high capacity by connecting a plurality of unit rechargeable batteries in series so as to be used for driving a motor for an apparatus requiring a large amount of power, i.e., an electrical vehicle, etc.

In addition, one large-capacity rechargeable battery is formed of a plurality of rechargeable batteries coupled in series, and the rechargeable battery may be formed in a cylindrical, prismatic, or pouch shape.

The electrode assembly includes a positive electrode, a negative electrode, and a separator disposed between the positive and negative electrodes. Here, the separator separates the positive electrode and the negative electrode to prevent short-circuit, and absorbs electrolyte solution required for battery reaction to maintain high ion conductivity.

In order to maintain a stable output, the separator should absorb a sufficient amount of electrolyte solution. However, while charging and discharging are repeated, the positive and negative electrodes expand so that the electrolyte solution in the separator is externally squeezed out.

As described, when a sufficient amount of electrolyte solution is not contained in the separator, ion movement is improperly performed so that an output is deteriorated and life-span of the rechargeable battery is shortened due to degradation of the electrode assembly.

The present invention has been made in an effort to provide an electrode assembly having an improved electrolyte solution replacement function and a rechargeable battery.

An electrode assembly according to an exemplary embodiment of the present invention includes a positive electrode, a negative electrode, a first separator between the positive and negative electrodes and a second separator disposed so that either the positive or the negative electrodes are between the first and second separators, each of the separators including elongate pores, wherein the separators are arranged such that the pores of the first separator are aligned in a first direction and the pores of the second separator are aligned in a second direction that crosses the first direction.

The pores on each of the separators may be aligned in substantially the same direction.

The first direction and the second direction may be perpendicular to each other, and the electrode assembly may be formed by sequentially stacking the positive electrode, the first separator, the negative electrode, and the second separator and spirally winding them with respect to a spiral rotation axis.

The first direction may be perpendicular to the spiral rotation axis, and may be a direction inclined to the spiral rotation axis. In addition, the electrode assembly may be formed by alternately stacking a plurality of positive and negative electrodes, interposing the first separator or the second separator therebetween.

According to the exemplary embodiment of the present invention, a direction of the pore formed in the first separator and a direction of the pore formed in the second separator are different from each other so that the electrolyte solution replacement function of the separator can be improved. Accordingly, a stable output can be provided and life-span can be improved.

Embodiments of the invention will now be described by way of example, with reference to the accompanying drawings, in which:
FIG. 1 is a cross-sectional view of a rechargeable battery according to a first exemplary embodiment of the present invention.
FIG. 2 is an exploded perspective view of an electrode assembly forming the rechargeable battery according to the first exemplary embodiment of the present invention.
FIG. 3 is a top plan view of the electrode assembly according to the first exemplary embodiment of the present invention.
FIG. 4 is a perspective view of an electrode assembly according to the second exemplary embodiment of the present invention.
FIG. 5 is a perspective view of an electrode assembly according to a third exemplary embodiment of the present invention.
FIG. 6 is a perspective view of an electrode assembly according to a fourth exemplary embodiment of the present invention.

The present invention will be described more fully hereinafter with reference to the accompanying drawings, in which exemplary embodiments of the invention are shown. As those skilled in the art would realize, the described embodiments may be modified in various different ways. In addition, like reference numerals designate like elements throughout the specification.

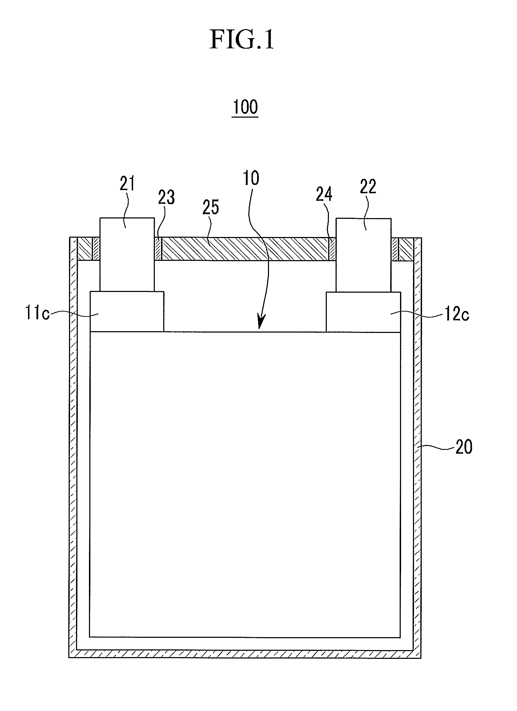

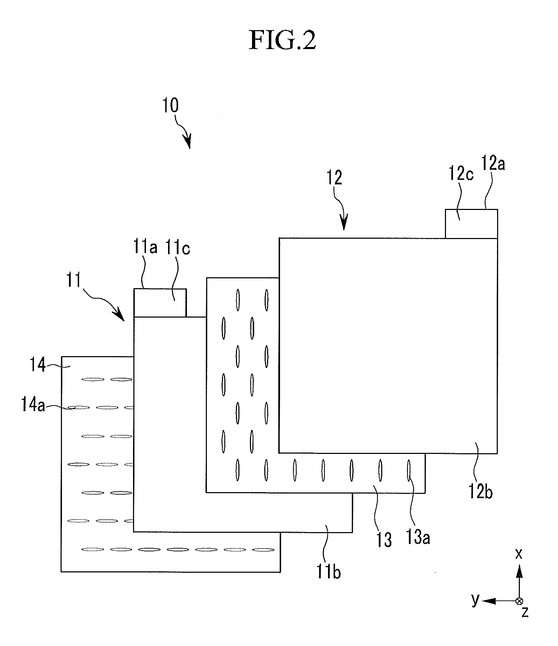

FIG. 1 is a cross-sectional view of a rechargeable battery according to a first exemplary embodiment of the present invention, and FIG. 2 is an exploded perspective view of an electrode assembly of the rechargeable battery according to the first exemplary embodiment of the present invention.

Referring to FIG. 1 and FIG. 2, a rechargeable battery 100 includes an electrode assembly 10 that performs charging and discharging, a case 20 in which the electrode assembly 10 is installed, and a cap plate 25 covering the case 20. The case 20 forms the entire exterior of the rechargeable battery 100, and provides a space for installing the electrode assembly 10. For example, the case 20 may have a prismatic rectangular pouch shape having an opening in one side thereof for receiving the electrode assembly 10 in a shape that corresponds to a rectangle. In addition, the case 20 may be made of a metal such as aluminum, an aluminum alloy, or nickel-plated steel or a laminate film forming a pouch.

The cap plate 25 is formed in a plate shape, and is combined to the opening formed in the case 20.

A positive electrode terminal 21 and a negative electrode terminal 22 are electrically connected in the electrode assembly 10, and the positive electrode terminal 21 and the negative electrode terminal 22 protrude outside the case 20. The positive electrode terminal 21 is electrically connected to a positive electrode uncoated region 11c, and the negative electrode terminal 22 is electrically connected to a negative electrode uncoated region 12c.

The positive electrode terminal 21 and the negative electrode terminal 22 penetrate the cap plate 25 and protrude outside the case 20, and gaskets 23 and 24 are provided between the positive electrode terminal 21 and the cap plate 25 and between the negative electrode terminal 22 and the cap plate 25.

The electrode assembly 10 includes a positive electrode 11, a negative electrode 12, a first separator 13 disposed between the positive and negative electrodes 11 and 12 and having a pore 13a extended in a first direction, and a second separator 14 disposed between the positive and negative electrodes 11 and 12 and having a pore 14a extended in a second direction that crosses the first direction.

The electrode assembly 10 has a structure in which a plurality of positive electrodes 11, the first separator 13, the negative electrode 12, and the second separator 14 are alternately stacked.

The positive electrode 11 or the negative electrode 12 is disposed between the first and second separators 13 and 14 and the second separator 14 is disposed at a distance from the first separator 13, interposing the positive electrode 11 or the negative electrode 12. The positive electrode 11 and the negative electrode 12 are alternately disposed between the first separator 13 and the second separator 14. In addition, the first separator 13 or the second separator 14 is disposed between the positive electrode 11 and the negative electrode 12, and the first separator 13 or the second separator 14 is alternately disposed between the positive electrode 11 and the negative electrode 12.

The positive electrode 11 is formed in a structure where a positive electrode active material layer 11b is coated on a positive electrode current collecting body 11a. The positive electrode current collecting body 11a is formed in a square plate shape, and is made of a material such as aluminum or stainless steel. The positive electrode active material layer 11b is made of LiCoO₂, LiMnO₂, LiFePO₄, LiNiO₂, LiMn₂O4, or a carbon-based active material, or a trivalent active material, a conductive agent, and a binder. The positive electrode active material layer 11b is not formed on an upper end of the positive electrode 11, and a positive electrode uncoated region 11c through which the current collecting body 11a is exposed is formed thereon instead. The negative electrode 12 has a structure in which a negative electrode active material layer 12b is coated on a negative electrode current collecting body 12a. A negative electrode current collecting body 12a is formed in a square plate shape, and is made of a material such as copper, stainless steel, or aluminum. The negative electrode active material layer 12b is made of Li₄Ti₅O₁₂, a carbon-based material, a conductive agent, or a binder. The negative electrode active material layer 12b is not formed on an upper end of the negative electrode 12, and a negative electrode uncoated region 12c through which the current collecting body 12a is exposed is formed thereon instead.

The first separator 13 and the second separator 14 may be made of a porous material, such as a polyolefin-based single or complex film such as polyethylene or polypropylene or a manila paper.

The pore 13a extended in the first direction is formed in the first separator 13, and the first direction refers to the x-axis direction in FIG. 2. The pore 14a extended in the second direction that crosses the first direction is formed in the second separator 14, and the second direction refers to the y-axis direction in FIG. 2. Here, the x-axis direction and the y-axis direction are perpendicular to each other. In the present exemplary embodiment, the first direction and the second direction are perpendicular to each other but the present invention is not limited thereto. The first direction and the second direction may cross each other so that they are not parallel.

For example, the first or the second directions in which the pores extend may be substantially parallel to the direction in which positive or negative electrode terminals extend from the positive or negative electrodes, or may be inclined at an angle to the direction in which positive or negative electrode terminals extend.

The pores (13a, 14a) in each of the separators may be generally elliptical in shape. The pores (13a) in the first separator may have a different size and shape from the pores (14a) formed in the second separator.

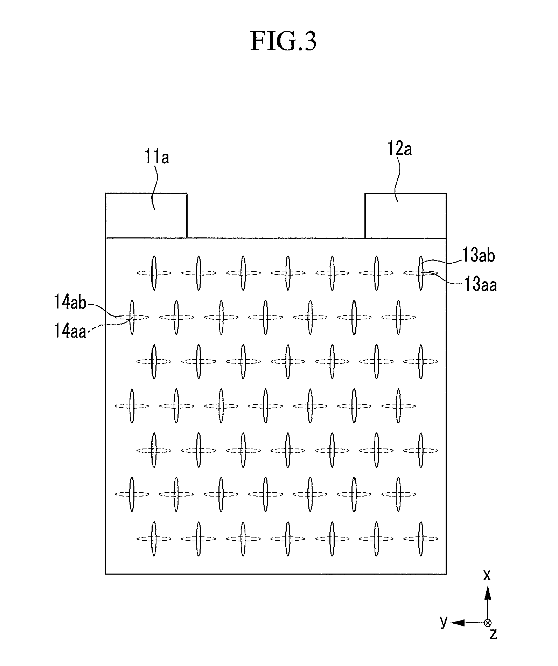

As shown in FIG. 3, in the stacked electrode assembly 10 as shown in FIG. 3, the pore 13a of the first separator 13 and the pore 14a of the second separator 14 cross each other, and the pore 13a of the first separator 13 includes an aligned region 13aa aligned with the pore 14a of the second separator 14 and a single region 13ab not-aligned with the pore 14a of the second separator 14. In addition, the pore 14a of the second separator includes an aligned region 14aa aligned with the pore 13a of the first separator 13 and a single region 14ab not-aligned with the pore 13a of the first separator 13.

As described, when the pores 13a and 14a of the first and second separators 13 and 14 are formed to cross each other, a portion where the pores 13a and 14a are aligned is reduced and a sufficient amount of electrolyte solution can be contained in the pores. In other words, the separators are configured to contain a greater amount of the electrolyte at the non-aligned regions than at the aligned regions.

In the aligned regions, the electrolyte solution may be squeezed down through the pores 13a and 14a so that electrolyte solution density is increased in the lower portion the electrode assembly 10 and decreased in the upper portion thereof of as time passes. When the electrolyte solution density in the upper portion of the electrode assembly 10 is decreased, degradation of the electrode assembly 10 is accelerated and life-span is shortened.

However, when the pores 13a and 14a cross each other as in the present exemplary embodiment, a much greater amount of electrolyte solution can be contained in the pores 13a and 14a so that decrease of the electrolyte solution density in the upper portion of the electrode assembly 10 can be prevented, thereby degradation of the electrode assembly 10 can be minimized.

In addition, when pressure is applied to the first and second separators 13 and 14 due to expansion of the electrode assembly 10, the amount of electrolyte solution being squeezed out through the pores 13a and 14a can be significantly reduced compared to the prior art. Therefore, with a sufficient amount of electrolyte solution in the separators 13 and 14, a stable output can be provided and degradation of the electrode assembly 10 can be prevented, thereby improving life-span.

In addition, since pressure applied to the separators 13 and 14 is dispersed, melting of the separators 13 and 14 due to increase of internal heat is prevented so that occurrence of internal short-circuit can be decreased. The separators 13 and 14 may be melted due to increase of heat and pressure, and therefore melting of the separators 13 and 14 can be prevented when the pressure is dispersed. Accordingly, reliability of the rechargeable battery 100 and the electrode assembly 10 can be improved.

In other words, if the directions of the pores of the first and second separators are the same, pressure is applied to the first and second separators in the same direction when the positive and negative electrodes expand. Accordingly, the electrolyte solution can be externally squeezed or forced out by this uni-directional pressure. On the other hand, if the directions of the pores of the first and second separators cross one another, as in the present invention, the pressure applied to the first and second separators can be spread or dispersed. Therefore, the squeezing out of the electrolyte solution and the melting of the separators can be effectively prevented.

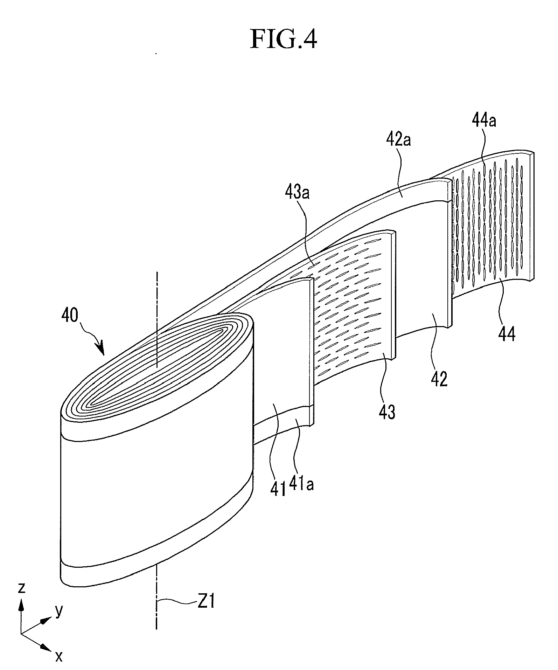

FIG. 4 is a perspective view of an electrode assembly according to a second exemplary embodiment of the present invention.

Referring to FIG. 4, an electrode assembly 40 according to the present exemplary embodiment includes a positive electrode 41, a negative electrode 42, a first separator 43 disposed between the positive and negative electrodes 41 and 42, and a second separator 44 disposed an external side of the negative electrode 42. In the present exemplary embodiment, the first separator 43 is disposed between the positive electrode 41 and the negative electrode 42, but the present invention is not limited thereto. The second separator 44 may be disposed between the positive electrode 41 and the negative electrode 42.

The electrode assembly 40 is formed in a jelly role shape by being spirally wound with respect to a spiral rotation axis Z1 in the state that the positive electrode 41, the first separator 43, the negative electrode 42, and the second separator 44 are sequentially disposed. In addition, the electrode assembly 40 is pressed flat after being spirally wound.

The positive electrode 41, the negative electrode 42, the first separator 43, and the second separator 44 are formed in a belt shape extended in one direction. A positive electrode uncoated region 41a that is not coated with a positive electrode active material is formed at one end in a side direction of the positive electrode 41, and a negative electrode uncoated region 42a that is not coated with a negative electrode active material is formed at the other end of the negative electrode 42.

A pore 43a extended in the y-axis direction that is perpendicular to the spiral rotation axis Z1 is formed in the first separator 43, and a pore 44a extended in the z-axis direction that is parallel with the spiral rotation axis Z1 is formed in the second separator 44.

Accordingly, the first direction in which the pore 43a formed in the first separator 43 is extended and the second direction in which the pore 44a formed in the second separator 44 is extended cross each other.

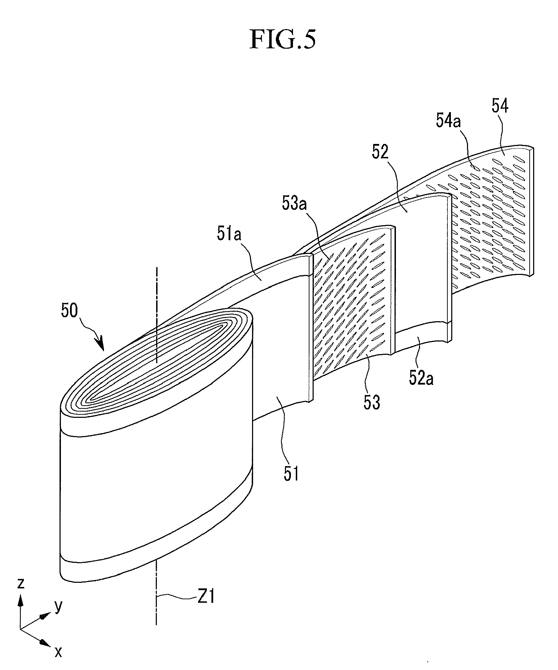

FIG. 5 is a perspective view of an electrode assembly according to a third exemplary embodiment of the present invention.

Referring to FIG. 5, an electrode assembly 50 according to the present exemplary embodiment includes a positive electrode 51, a negative electrode 52, a first separator 53 disposed between the positive electrode 51 and the negative electrode 52, and a second separator 54 disposed in an external side of the negative electrode 51.

The electrode assembly 50 is formed in a jelly roll shape by being spirally wound with respect to a spiral rotation axis Z1 in the state that the positive electrode 51, the first separator 53, the negative electrode 52, and the second separator 54 are sequentially stacked. In addition, the electrode assembly 50 is pressed flat after being spirally wound.

The positive electrode 51, the negative electrode 52, the first separator 53, and the second separator 54 are formed in a belt shape extended in one direction. A positive electrode uncoated region 51a that is not coated with a positive electrode active material is formed at one end in a side direction of the positive electrode 51, and a negative electrode uncoated region 52a that is not coated with a negative electrode active material is formed at the other end of the negative electrode 52.

A pore 53a extended in a first direction that is inclined with respect to a spiral rotation axis Z1 is formed in the first separator 53, and a pore 54a extended in a second direction that is inclined with respect to the spiral rotation axis Z1 is formed in the second separator 54.

In this case, the second direction is inclined opposite to the first direction so that the first direction and the second direction cross each other. In addition, the second direction may be perpendicular to the first direction.

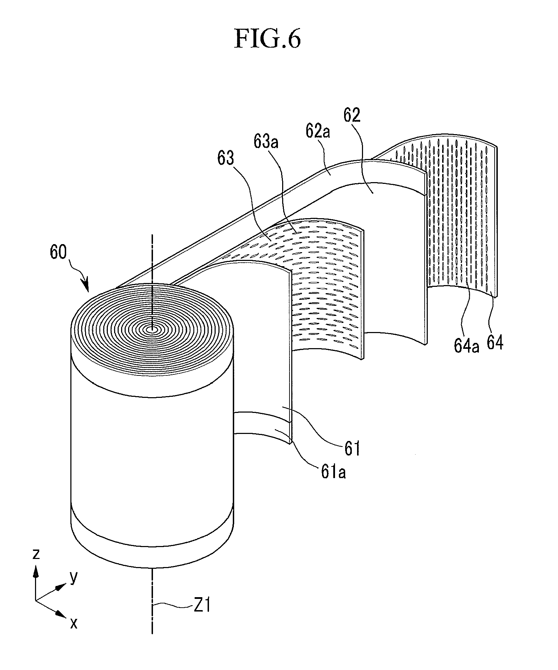

FIG. 6 is a perspective view of an electrode assembly according to a fourth exemplary embodiment of the present invention.

Referring to FIG. 6, an electrode assembly 60 according to the present exemplary embodiment includes a positive electrode 61, a negative electrode 62, a first separator 63 disposed between the positive electrode 61 and the negative electrode 62, and a second separator 64 disposed in an external side of the negative electrode 61. In the present exemplary embodiment, the first separator 63 is disposed between the positive electrode 61 and the negative electrode 62, but the present invention is not limited thereto. The second separator 64 may be disposed between the positive electrode 61 and the negative electrode 62.

The electrode assembly 60 is formed in a cylinder shape by being spirally wound with respect to a spiral rotation axis Z1 in the state that the positive electrode 61, the first separator 63, the negative electrode 62, and the second separator 64 are sequentially disposed.

The positive electrode 61, the negative electrode 62, the first separator 63, and the second separator 64 are formed in a belt shape extended in one direction, and a positive electrode uncoated region 61a that is not coated with a positive electrode active material is formed at one end in a side direction of the positive electrode 61 and a negative electrode uncoated region 62a that is not coated with a negative electrode active material is formed at the other end of the negative electrode 62.

A pore 63a extended in the y-axis direction that is perpendicular to the spiral rotation axis Z1 is formed in the first separator 63, and a pore 64a extended in the z-axis direction that is parallel with the spiral rotation axis Z1 is formed in the second separator 64.

Accordingly, the first direction in which the pore 63a formed in the first separator 63 is extended and the second direction in which the pore 64a formed in the second separator 64 is extended cross each other.

While this invention has been described in connection with what are presently considered to be practical exemplary embodiments, it is to be understood that the invention is not limited to the disclosed embodiments, but, on the contrary, is intended to cover various modifications and equivalent arrangements included within the scope of the appended claims.

## Claims

1. An electrode assembly for a rechargeable battery, comprising:
a positive electrode;
a negative electrode;
a first separator between the positive and negative electrodes; and
a second separator disposed so that either the positive or the negative electrodes are between the first and second separators, each of the separators including elongate pores;
wherein the separators are arranged such that the pores of the first separator are aligned in a first direction and the pores of the second separator are aligned in a second direction that crosses the first direction.

2. The electrode assembly according to claim 1, wherein the pores on each of the separators are aligned in substantially the same direction.

3. The electrode assembly of claim 1 or 2, wherein the first and second directions are perpendicular to one another.

4. The electrode assembly of any one of claims 1 to 3, wherein the elongate pores have a generally elliptical shape.

5. The electrode assembly of any one of the preceding claims, wherein the pores of the first separator have sizes and/or shapes different from those of the pores of the second separator.

6. The electrode assembly of any one of the preceding claims, comprising a plurality of stacked positive and negative electrode plates with the first and second separators interposed between them.

7. The electrode assembly of claim 6, wherein the first or the second directions are substantially parallel to the direction in which positive or negative electrode terminals extend from the positive or negative electrodes.

8. The electrode assembly of claim 6, wherein the first or the second directions are inclined at an angle to the direction in which positive or negative electrode terminals extend from the positive or negative electrodes.

9. The electrode assembly of any one of claims 1 to 5, comprising a plurality of electrode and separator layers wound around a central axis to form a cylindrical or jelly roll assembly.

10. The electrode assembly of claim 9, wherein the first or the second directions are substantially perpendicular to the central axis, or are inclined at an angle to the central axis.

11. The electrode assembly of any one of the preceding claims, wherein the pores of the first separator are aligned with the pores of the second separator at alignment regions and further comprise non-aligned regions where the pores of the first and second separators are not aligned with each other.

12. The electrode assembly of claim 11, wherein the rechargeable battery includes electrolyte, wherein the separators are configured to contain a greater amount of the electrolyte at the non-aligned regions than at the aligned regions.

13. A rechargeable battery comprising:
a case; and
an electrode assembly according to any one of the preceding claims in the case.

14. A method of making a rechargeable battery according to claim 13, comprising:
alternately stacking a plurality of positive and negative electrode plates with the first and second separators interposed between them.

15. A method of making a rechargeable battery according to claim 13, comprising:
forming a plurality of layers comprising positive and negative electrodes with the first and second separators interposed between them; and
winding the plurality of layers around a central axis.
